# EUROPÄISCHE PATENTSCHRIFT

(11) **EP 1 314 003 B1**
(45) Veröffentlichungstag und Bekanntmachung des Hinweises auf die Patenterteilung: **19.01.2005**
(21) Anmeldenummer: 01971625.7
(22) Anmeldetag: 21.08.2001
(51) Int. Cl.: G01D 5/16, G01D 5/245

(54) **MAGNETORESISTIVER SENSOR ZUR ABTASTUNG EINES MAGNETISCHEN MULTIPOLRADES**
MAGNETO-RESISTIVE SENSOR FOR SCANNING A MAGNETIC MULTIPOLE WHEEL
CAPTEUR MAGNETORESISTANT DESTINE AU BALAYAGE D'UNE ROUE MULTIPOLE MAGNETIQUE

(30) Priorität: 22.08.2000 DE 10041087
(43) Veröffentlichungstag der Anmeldung: 28.05.2003
(73) Patentinhaber: ROBERT BOSCH GMBH, 70442 Stuttgart (DE)
(72) Erfinder: HAAS, Gunther, F-35760 St. Grégoire (FR); SIEGLE, Henrik, 71229 Leonberg (DE)
(86) Internationale Anmeldenummer: PCT/DE2001/003190
(87) Internationale Veröffentlichungsnummer: WO 2002/016878

(56) Entgegenhaltungen:
- US-A- 4 818 939
- US-A- 5 430 375

## Beschreibung

### Stand der Technik

Positions- bzw. Winkelmessung durch Abtastung magnetischer Maßstäbe bzw. Multipolräder sind beim Stand der Technik beschrieben, bspw. in der DE 195 06 938 A 1.

### Aufgabe der Erfindung

Bei den sich in der Praxis ergebenden Abständen zwischen Magnetsensor und Maßstab ist der Verlauf des magnetischen Fe1-des nicht- wie angenommen - ideal sinusförmig, sondern enthält rechteckige Anteile, die sich im allgemeinen gut durch eine dritte und eine fünfte Oberwelle der Sinusfunktion beschreiben lassen. Dadurch wird die Genauigkeit des Verfahrens eingeschränkt. Ein oberwellenfreier Feldverlauf ist im allgemeinen nur bei relativ großen Arbeitsabständen und damit bei sehr geringen Arbeitsfeldstärken gegeben (exponentieller Abfall der Feldstärke mit dem Abstand), was das System sehr störempfindlich macht.

Die Erfindung schlägt eine Sensorstruktur vor, die aufgrund ihrer Geometrie die dritte und/oder die fünfte Oberwelle aus dem Signal herausfiltert, so dass sich als Messwert auch für geringe Abstände zwischen Sensor und Maßstab ein sinusförmiger Verlauf ergibt. Der Verlauf ist durch besagte Oberwellenkorrektur außerdem weitgehend unabhängig vom Arbeitsabstand des Sensors, so dass auch der Einfluss einer eventuell im System vorhandenen Exzentrizität auf das Messergebnis minimiert wird.

### Kern und Vorteile der Erfindung

Positionsgeber mit verbesserter Genauigkeit und Störunempfindlichkeit durch Betrieb bei kleinen Arbeitsabständen. Unempfindlich gegenüber Exzentrizitäten des Polrads bzw. dessen Lagerung.

### Detaillierte Beschreibung von Aufbau und Funktion

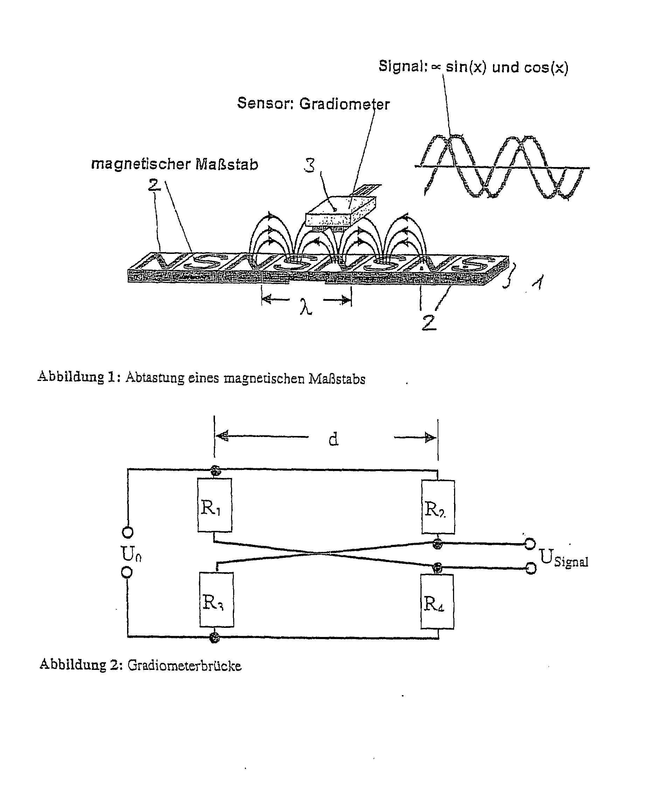

Stand der Technik ist es, magnetische Maßstäbe (z. B. Multipolräder) mittels sog. Gradiometer abzutasten, s. auch Abb. 1. Dabei handelt es sich um eine Wheatstone'sche Brückenschaltung, bestehend aus vier gleichartigen, magnetoresisitven Elementen, wobei die beiden Halbbrücken räumlich getrennt sind, s. Abb. 2. Jedes Einzelelement der Brücke liefert dabei eine Spannung als Funktion des dort anliegenden Magnetfeldes. Wir nehmen an, dass die Ausgangsspannung jedes Einzelelementes der Brücke sinusförmig mit dem Richtungswinkel des anliegenden Magnetfeldes variiert. Dies ist insbesondere dann der Fall, wenn als magnetoresistives Element ein sog. "Spin-Valve" zum Einsatz kommt. Bewegt sich der Maßstab in diesem Fall um ein Polpaar an dem Sensor vorbei, so entspricht dies einer Phase von 360° des Signals am Einzelwiderstand. Der Abstand der beiden Halbbrücken,d,beträgt üblicherweise die halbe Länge eines Polpaares, d. h. λ/2 (vgl. Abb. 1), da dabei die Phasen der Signale an den beiden Halbbrücken um 180° phasenverschoben sind und damit ein sinusförmiges Brückenausgangssignal maximaler Amplitude zur Verfügung steht.

Die Erfindung nutzt nun die Tatsache, dass
1. auch bei einem Abstand d der beiden Halbbrücken ungleich λ/2 in den meisten Fällen ein sinusförmiges Brückensignal
2. zur Verfügung steht, wenn auch mit leicht reduzierter Amplitude;
3. die Brücke für Oberwellen der Periode d kein Signal liefert.

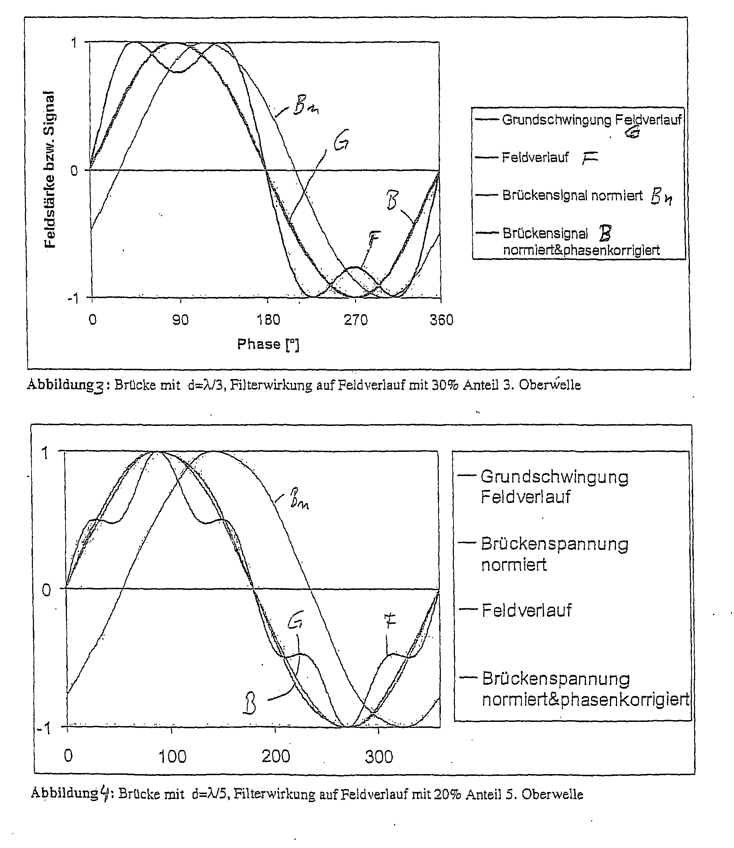

Aus Symmetriegründen treten bei besagten Polrädern nur ungeradzahlige Oberwellen auf. Will man eine Brücke realisieren, die die dritte Oberwelle unterdrückt, so ist der Abstand d=λ/3 (120°) oder ein Vielfaches davon zu wählen. Die Phase zwischen den Halbbrücken beträgt dann 120°, was genau der Periode der dritten Oberwelle entspricht. Die Brückenspannung reduziert sich in diesem Fall auf 90% gegenüber der Brücke mit d=λ/2, und das Brückensignal ist um eine Phase von 30° gegenüber der Grundwelle des Ursprungsignals verschaben, s. Abb. 3.

Ebenso kann die fünfte Oberwelle durch einen Abstand der Halbbrücken von d=λ/5 oder eines Vielfachen davon unterdrückt werden, s. Abb. 4.

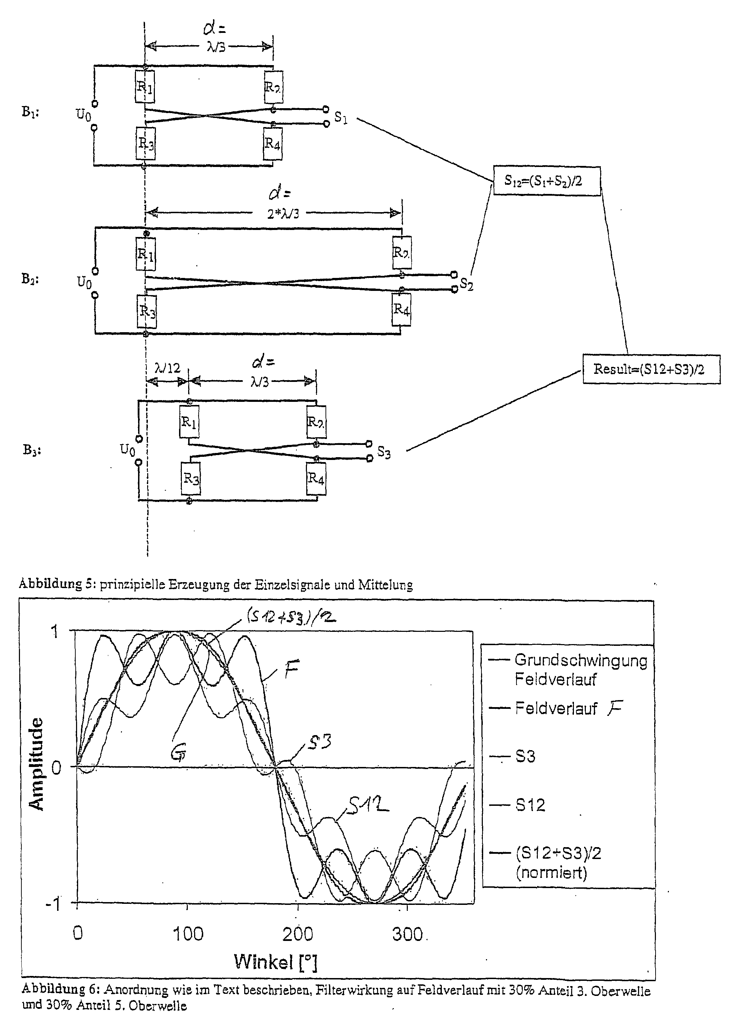

In der Praxis ist eine hinreichend gute Oberwellenunterdrükkung dann gegeben, wenn die dritte und die fünfte Oberwelle unterdrückt werden. Dies kann durch die folgende Anordnung und Signalauswertung erreicht werden (vgl. Abb. 5 und 6):
1. Das Signal S₁ einer Brücke B₁ mit d=λ/3 wird mit dem Signal S₂ einer zweiten Brücke B₂ mit d=2*λ/3 gemittelt, resultierendes Signal ist S₁₂.
2. Es steht weiterhin ein Signal S₃ einer Brücke B₃ mit d=λ/3 zur Verfügung, welches gegenüber B₁ und B₂ um 30° phasenverschoben angeordnet ist. Es handelt sich somit um das phasenkorrigierte Signal der 120°-Brücke.
3. Der Mittelwert zwischen S₁₂ und S₃ ergibt den um die dritte und fünfte Oberwelle gefilterten Feldverlauf.

## Patentansprüche

1. Positionsgeber mit wenigstens einen magnetoresistiven Sensor und zugehörigen Magnetischen Multipolrad, wobei das Polrad eine Vielzahl von gleichförmig angeordneten Polpaaren (2) aufweist, wobei der wenigstens eine Sensor aus vier magnetoresitiven Widerständen R₁, R₂, R₃, R₄ besteht, die elektrisch als Wheatstone-Brücke mit zwei Halbbrücken geschaltet sind, wobei an einer Brückendiagonale eine Spannung U0 eingespeist wird und an der anderen Diagonale ein sinus- bzw, cosinusförmiges Signal (S1) entsteht, wobei der Abstand (d) zwischen den beiden parallel zueinander liegenden Widerständen R1 und R2 bzw. R3 und R4 in Bezug auf die Abtastrichtung des Multipolrades (1) so gewählt ist, das er ungleich der halben Wellenlänge (λ) eines Polpaares (2) ist, **dadurch gekennzeichnet, dass** der Abstand zwischen den Widerständen R1 und R2 sowie zwischen den Widerständen R3 und R4 gleich ist.

2. Sensor nach Anspruch 1, **dadurch gekennzeichnet, dass** der Abstand (d) so wählbar ist, dass er einem Drittel der Wellenlänge (λ) entspricht.

3. Sensor nach Anspruch 1, **dadurch gekennzeichnet, dass** der Abstand (d) so wählbar ist, dass er einem Fünftel der Wellenlänge (λ) entspricht.

4. Sensor nach Anspruch 2 oder 3, **dadurch gekennzeichnet, dass** der Abstand (d) einem Vielfachen der Teilwellenlänge entspricht.

5. Sensor nach einem der vorhergehenden Ansprüche, **dadurch gekennzeichnet, dass** ein zweiter Sensor (3) vorsehbar ist, dass der zweite Sensor (3) ebenfalls elektrisch als Wheatstone-Brücke mit zwei Halbbrücken ausgebildet ist und dass der Abstand der Halbbrücken des ersten Sensors d=λ/3 und der Abstand der Halbbrücken des zweiten Sensors d=2*λ/3 beträgt.

6. Sensor nach Anspruch 5, **dadurch gekennzeichnet, dass** die Signale der beiden Brücken gemittelt werden.

7. Sensor nach Anspruch 5 oder 6, **dadurch gekennzeichnet, dass** ein dritter Sensor mit einer gleichartig aufgebauten Brücke nachgeschaltet ist, bei der der Abstand d=λ/3 beträgt und dass der dritte Sensor gegenuber den ersten und den zweiten Brücken um 30° phasenverschoben angeordnet ist.

8. Sensor nach einem der vorhergehenden Ansprüche, **dadurch gekennzeichnet, dass** aus den Signalen der drei Brücken der Mittelwert bestimmbar ist.

9. Sensor nach einem der vorhergehenden Ansprüche, **dadurch gekennzeichnet, dass** der Sensor zur Bestimmung eines Drehwinkels verwendbar ist.

## Claims

1. Position transmitter having at least one Magnetoresistive sensor and an associated Magnetic multipole wheel having a large number of uniformly arranged pole pairs (2), the at least one sensor comprising four Magnetoresistive resistors R₁, R₂, R₃, R₄ which are electrically connected as a Wheatstone bridge with four half bridges, with a voltage UO being fed in one bridge diagonal and a sinusoidal or cosinusoidal signal (S1) being produced on the other diagonal, with the distance (d) between the two resistors R1 and R2, or R3 and R4 which are located parallel to one another being selected with reference to the scanning direction of the multipole wheel (1) such that it is not equal to half the wavelength (λ) of a pole pair (2), **characterized in that** the distance between the resistors R1 and R2 and between the resistors R3 and R4 is the same.

2. Sensor according to Claim 1, **characterized in that** the distance (d) can be chosen such that it corresponds to one third of the wavelength (λ).

3. Sensor according to Claim 1, **characterized in that** the distance (d) can be chosen such that it corresponds to one fifth of the wavelength (λ).

4. Sensor according to Claim 2 or 3, **characterized in that** the distance (d) corresponds to a multiple of the fractional wavelength.

5. Sensor according to one of the preceding claims, **characterized in that** a second sensor (3) can be provided, **in that** the second sensor (3) is likewise electrically in the form of a Wheatstone bridge with two half bridges, and **in that** the distance between the half bridges of the first sensor is d=λ/3, and the distance between the half bridges of the second sensor is d=2*λ/3.

6. Sensor according to Claim 5, **characterized in that** the signals from the two bridges are averaged.

7. Sensor according to Claim 5 or 6, **characterized in that** a third sensor with an identical bridge is connected downstream, in which the distance d is λ/3, and **in that** the third sensor is arranged with a phase shift of 30° with respect to the first and second bridges.

8. Sensor according to one of the preceding claims, **characterized in that** the mean value can be determined from the signals from the three bridges.

9. Sensor according to one of the preceding claims, **characterized in that** the sensor can be used to determine a rotation angle.

## Revendications

1. Transmetteur de position comprenant au moins un capteur magnétorésistif et une roue multipôle magnétique associée,
dans lequel la roue multipôle comporte une multiplicité de paires de pôles (2) disposées de manière uniforme,
et au moins un capteur est constitué de quatre résistances magnétorésistives (R₁, R₂, R₃ et R₄) couplées électriquement sous forme de pont de Wheatstone comportant deux demi-ponts,
une tension (UO) étant injectée sur l'une des diagonales de pont et un signal sinusoïdal ou cosinusoïdal (S1) étant produit sur l'autre diagonale,
la distance (d) entre les deux résistances R₁ et R₂ (ou encore R₃ et R₄) situées parallèlement entre elles, par rapport à la direction de balayage de la roue multipôle (1), étant choisie de telle manière qu'elle est différente de la moitié de la longueur d'onde (λ) d'une paire de pôles (2), **caractérisé en ce que**
la distance entre les résistances R₁ et R₂, et entre les résistances R3 et R4, est la même.

2. Capteur selon la revendication 1,
**caractérisé en ce que**
la distance (d) peut être choisie de telle manière qu'elle correspond à un tiers de la longueur d'onde (λ).

3. Capteur selon la revendication 1,
**caractérisé en ce que**
la distance (d) peut être choisie de telle manière qu'elle correspond à un cinquième de la longueur d'onde (λ).

4. Capteur selon la revendication 2 ou 3,
**caractérisé en ce que**
la distance (d) correspond à un multiple de la longueur d'onde partielle.

5. Capteur selon l'une des revendications précédentes,
**caractérisé en ce qu'**
un deuxième capteur (3) peut être prévu, ce deuxième capteur (3) est constitué lui aussi électriquement d'un pont de Wheatstone comportant deux demi-ponts, et la distance des demi-ponts du premier capteur est d = λ/3, alors que la distance des demi-ponts du deuxième capteur est d = 2*λ/3.

6. Capteur selon la revendication 5,
**caractérisé en ce que**
les signaux des deux ponts sont moyennés.

7. Capteur selon la revendication 5 ou 6,
**caractérisé en ce qu'**
un troisième capteur est monté en aval, lequel comporte un pont conçu de manière similaire dans lequel la distance est d = λ/3, et ce troisième capteur est disposé de manière déphasée de 30° par rapport au premier et au deuxième pont.

8. Capteur selon l'une des revendications précédentes,
**caractérisé en ce qu'**
à partir des signaux des trois ponts la valeur moyenne peut être déterminée.

9. Capteur selon l'une des revendications précédentes,
**caractérisé en ce que**
le capteur peut être utilisé pour déterminer un angle de rotation.
